# EUROPEAN PATENT APPLICATION

(11) **EP 2 571 107 A2**
(43) Date of publication of application: **20.03.2013**
(21) Application number: 12250143.0
(22) Date of filing: 30.08.2012
(51) Int. Cl.: H01R 13/52

(54) **Connector and electronic device having the same**

(30) Priority: 14.09.2011 JP 2011200358; 13.01.2012 JP 2012004883
(71) Applicant: Hosiden Corporation, Yao-shi, Osaka 581-0071 (JP)
(72) Inventor: Nagata, Takayuki, Yao-shi Osaka 581-0071 (JP); Sasaki, Daisuke, Yao-shi Osaka 581-0071 (JP)
(74) Representative: Beresford, Keith Denis Lewis

(57) **Abstract**

A waterproof connector and an electronic device having the same are disclosed. The connector includes a case 100, a body 200, a contact 300, and an annular joint 500. The case 100 includes a through hole 111 and a periphery 112b of the through hole 111. The body 200 includes a main body 210 having a front portion 211 received in the through hole 111 of the case 100 and a rear portion 212 continuous with the front portion 211. The contact 300 includes an intermediate portion 330 held in the main body 210, a contact portion 310 received in the through hole 111 of the case 100, and a tail portion 320 located on the opposite side of the intermediate portion 330 from the contact portion 310. The annular joint 500 is made of an insulating resin and joins the rear portion 212 of the main body 210 and the periphery 112b of the case 100.

## Description

The invention relates to connectors and electronic devices having the same.

Japanese Patent Application Laid-Open (JP-A) No. 2001-250629 discloses a connector installed in a portable terminal such as a smartphone. The connector has a cap of a silicon resin fittingly attached thereto. The cap reduces water intrusion through the connector into the portable terminal.

A problem with the above conventional connector is that improper attachment of the cap to the connector tends to cause water intrusion through the connector into the portable terminal.

The invention has been contrived in view of the above circumstances. The invention provides a waterproof connector and an electronic device having the same.

To solve the above problem, a connector of the invention includes a case, a body, a contact, and an annular joint. The case includes a through hole and a periphery of the through hole. The body includes a main body, the main body including a front portion received in the through hole of the case and a rear portion continuous or integrally formed with the front portion. The contact includes an intermediate portion held in the main body, a contact portion received in the through hole of the case, and a tail portion located on an opposite side of the intermediate portion from the contact portion. The annular joint is made of an insulating resin and joins the rear portion of the main body and the periphery of the through hole of the case.

According to this aspect of the invention, as the annular joint joins the rear portion of the main body and the periphery of the through hole of the case, the connector can reduce intrusion of water and dust through between the body and the case. With the annular joint of an insulating resin fabricated by outsert molding or a similar method, the connector can provide favorable waterproofness and dustproofness at low cost.

The body may further include an abutting portion being provided on the rear portion of the main body and abutting the periphery of the through hole of the case. The abutting portion may be embedded in the annular joint. According to this aspect of the invention, the annular joint embedded with the abutting portion provides an improved joining strength in joining the rear portion of the main body and the periphery of the through hole of the case.

The connector may further include a shield case of tuboid shape possessing electrical conductivity. The shield case may fit in the through hole of the case. The front portion of the main body may fit in the shield case. The contact portion of the contact may be enclosed by the shield case. The annular joint may join the rear portion of the main body, the periphery of the through hole of the case, and the shield case.

According to this aspect of the invention, as the annular joint joins the rear portion of the main body, the periphery of the through hole of the case, and the shield case, the connector can reduce water intrusion through between the body and the shield case and through between the case and the shield case. Further, with the contact portion of the contact enclosed by the shield case, the connector provides improved electromagnetic interference (EMI) characteristics.

The shield case may include a tuboid portion fitting in the through hole of the case, and an engaging portion continuous with the tuboid portion. The engaging portion may be engaged with the periphery of the through hole of the case and embedded in the annular joint.

This aspect of the invention makes it easy to position the shield case with respect to the case in the assembly of the connector, by engaging the engaging portion of the shield case with the periphery of the through hole of the case. Further, as the engaging portion is embedded in the annular joint, the annular joint provides an improved joining strength in joining the shield case, the rear portion of the main body, and the periphery of the through hole of the case.

The engaging portion may be folded back toward the tuboid portion side. The engaging portion may include an end abutting the periphery of the through hole of the case.

This aspect of the invention makes it easy to position the shield case with respect to the case, simply by bringing the end of the engaging portion into abutment with the periphery of the through hole of the case.

The shield case may include a tuboid portion fitting in the through hole of the case, and a connecting portion being continuous with the tuboid portion and passing through the annular joint.

According to this aspect of the invention, the connecting portion passes through the annular joint, i.e. it is partially embedded in the annular joint. Therefore, the annular joint provides a further improved joining strength in joining the shield case, the rear portion of the main body, and the periphery of the through hole of the case.

The connecting portion may include a curved portion curved in a generally U-shape or in a serpentine shape and embedded in the annular joint.

According to this aspect of the invention, as the curved portion of a generally U- or serpentine shape is embedded in the annular joint, it is possible to increase the surface distance (contact area) of the curved portion with respect to the resin of the annular joint. Even when a narrow gap exists along the boundary of the curved portion and the resin of the annular joint, the gap should be lengthened in accordance with the increase of the surface distance. Therefore, the connector can reduce intrusion of water and dust through the gap if any. Consequently, the connector provides favorably improved waterproofness and dustproofness.

The connecting portion may further include a basal portion continuous or integrally formed with the tuboid portion and embedded in the annular joint, and a distal portion projecting from the annular joint. The curved portion may bridge the basal portion and the distal portion.

According to this aspect of the invention, the curved portion of a generally U- or serpentine shape bridges between the basal portion and the distal portion. As such, even when a very narrow gap exists along the boundary of the basal portion and the curved portion of the connecting portion and the resin of the annular joint, the gap should have a curved part of generally U- or serpentine shape along the curved portion. That is, the gap formed along the basal portion and the curved portion should not be formed straight. Such non-straight gap is unlikely to allow intrusion of water and dust. Consequently, the connector can be further improved in terms of waterproofness and dustproofness.

The curved portion may include first and second opposed portions facing each other, and a protrusion provided on at least one of the first and second opposed portions. The protrusion may abut the other of the first and second opposed portions and create a space between the first and second opposed portions. The resin of the annular joint may be filled in the space.

According to this aspect of the invention, the abutment of the protrusion against the other of the first and second opposed portions creates a space between the first and second opposed portions. As the resin of the annular joint is filled in the space, it is possible to further increase the surface distance (contact area) of the curved portion with respect to the annular joint. Consequently, the connector can be further improved in terms of waterproofness and dustproofness.

The shield case may include a tuboid portion fitting in the through hole of the case, and a fixing portion continuous or integrally formed with the tuboid portion and embedded in the annular joint.

According to this aspect of the invention, with the fixing portion embedded in the annular joint, the annular joint provides an improved joining strength in joining the shield case, the rear portion of the main body, and the periphery of the through hole of the case.

The connector may be provided with a plurality of abutting portions circumferentially arranged at intervals on and around an outer circumferential surface of the main body. According to this aspect of the invention, the annular joint has embedded therein the plurality of abutting portions circumferentially arranged at intervals on and around the outer circumferential surface of the main body. Therefore, the annular joint provides an improved joining strength in joining the shield case, the rear portion of the main body, and the periphery of the through hole of the case.

The connector may be provided with a plurality of abutting portions circumferentially arranged at intervals on and around an outer circumferential surface of the main body, and the fixing portion may fit in between adjacent ones of the abutting portions. According to this aspect of the invention, the annular joint has embedded therein the plurality of abutting portions circumferentially arranged at intervals on and around the outer circumferential surface of the main body. Therefore, the annular joint provides an improved joining strength in joining the shield case, the rear portion of the main body, and the periphery of the through hole of the case. Further, the shield case can be easily attached to the body in the assembly of the connector by fitting the fixing portion of the shield case between the adjacent abutting portions.

One of the periphery of the through hole of the case and the abutting portion may be provided with a protrusion, and the other thereof may be provided with a recess to fit over the protrusion. This aspect of the invention makes it easy to attach the body to the case in the assembly of the connector by fitting the protrusion in the recess.

The intermediate portion of the contact may be preferably embedded in the main body. This aspect of the invention improves the waterproofness and the dustproofness of the connector.

The connector may further include a shield cover possessing electrical conductivity to partially cover the case and the annular joint. This aspect of the invention further improves the EMI characteristic of the connector.

The connector may preferably be configured such that at least one of the case, the body, and the annular joint is made of a polyamide resin. As polyamide resins generally provide favorable adherence to other kinds of resin materials and metals, the connector of this aspect of the invention can provide improved waterproofness and dustproofness. Further, as polyamide resins generally provide favorably high rigidity than other resin materials, the connector of this aspect can also provide an improved prying resistance.

The connector may include a ring-shaped gasket fitting around the case. According to this aspect of the invention, the ring-shaped gasket fitting around the case can be interposed between the connector and a housing of an electronic device for mounting the connector. The gasket can therefore reduce intrusion of water, dust, and grit through between the connector and the housing of the electronic device.

An electronic device of the invention may include the connector according to any one of the above aspects.

The invention will now be described by way of example only and without limitation with reference to the drawings, in which:
Fig. 1A is a front, top, right side perspective view of a connector according to Embodiment 1 of the invention.
Fig. 1B is a rear, top, left side perspective view of the connector.
Fig. 1C is a front, bottom, right side perspective view of the connector.
Fig. 1D is a rear, bottom, left side perspective view of the connector.
Fig. 2A is a rear, top, left side perspective view of the connector, with a shield cover thereof removed and an annular joint thereof shown in dotted outline.
Fig. 2B is a rear, bottom, right side perspective view of the connector, with the shield cover thereof removed and the annular joint thereof shown in dotted outline.
Fig. 3A is a cross-sectional view of the connector taken along line 3A-3A in Fig. 1A, with a gasket thereof removed.
Fig. 3B is a cross-sectional view of the connector taken along line 3B-3B in Fig. 1A, with the gasket thereof removed.
Fig. 3C is a cross-sectional view of the connector taken along line 3C-3C in Fig. 1A, with the gasket thereof removed.
Fig. 3D is a cross-sectional view of the connector taken along line 3D-3D in Fig. 1A, with the gasket thereof removed.
Fig. 4A is an exploded and front, top, right side perspective view of the connector.
Fig. 4B is an exploded and front, bottom, left side perspective view of the connector.
Fig. 5A is a front, top, right side perspective view of a connector according to Embodiment 2 of the invention.
Fig. 5B is a rear, top, left side perspective view of the connector.
Fig. 5C is a front, bottom, right side perspective view of the connector.
Fig. 5D is a rear, bottom, left side perspective view of the connector.
Fig. 6A is a rear, top, left side perspective view of the connector, with a shield cover thereof removed and an annular joint thereof shown in dotted outline.
Fig. 6B is a rear, bottom, right side perspective view of the connector, with the shield cover thereof removed and the annular joint thereof shown in dotted outline.
Fig. 7A is a cross-sectional view of the connector taken along line 7A-7A in Fig. 5A, with a gasket thereof removed.
Fig. 7B is a cross-sectional view of the connector taken along line 7B-7B in Fig. 5A, with the gasket thereof removed.
Fig. 7C is a cross-sectional view of the connector taken along line 7C-7C in Fig. 5A, with the gasket thereof removed.
Fig. 7D is a cross-sectional view of the connector taken along line 7D-7D in Fig. 5A, with the gasket thereof removed.
Fig. 8A is an exploded and front, top, right side perspective view of the connector.
Fig. 8B is an exploded and front, bottom, left side perspective view of the connector.
Fig. 9A is a front, top, right side perspective view of a connector according to Embodiment 3 of the invention.
Fig. 9B is a rear, bottom, left side perspective view of the connector.
Fig. 10A is a rear, top, left side perspective view of the connector, with a shield cover thereof removed and an annular joint thereof shown in dotted outline.
Fig. 10B is a rear, bottom, right side perspective view of the connector, with the shield cover thereof removed and the annular joint thereof shown in dotted outline.
Fig. 11A is a cross-sectional view of the connector taken along line 11A-11A in Fig. 9A, with a gasket thereof removed.
Fig. 11B is a cross-sectional view of the connector taken along line 11B-11B in Fig. 9A, with the gasket thereof removed.
Fig. 11C is a cross-sectional view of the connector taken along line 11C-11C in Fig. 9A, with the gasket thereof removed.
Fig. 11D is a cross-sectional view of the connector taken along line 11D-11D in Fig. 9A, with the gasket thereof removed.
Fig. 12A is an exploded and front, top, right side perspective view of the connector.
Fig. 12B is an exploded and front, bottom, left side perspective view of the connector.

In the description which follows, relative spatial terms such as "upper", "lower", "upward", "downward", "top", "bottom", "left", "right", "front", "rear", etc., are used for the convenience of the skilled reader and refer to the orientation of the connector and its constituent parts as depicted in the drawings. No limitation is intended by use of these terms, either in use of the invention, during its manufacture, shipment, custody, or sale, or during assembly of its constituent parts or when incorporated into or combined with other apparatus.

Embodiments 1 to 3 of the invention will be described below.

### Embodiment 1

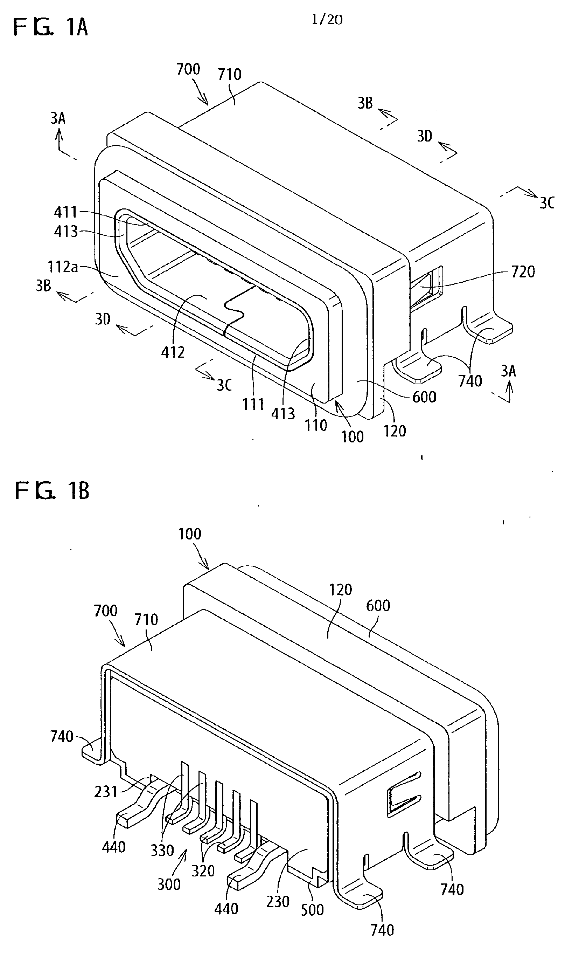

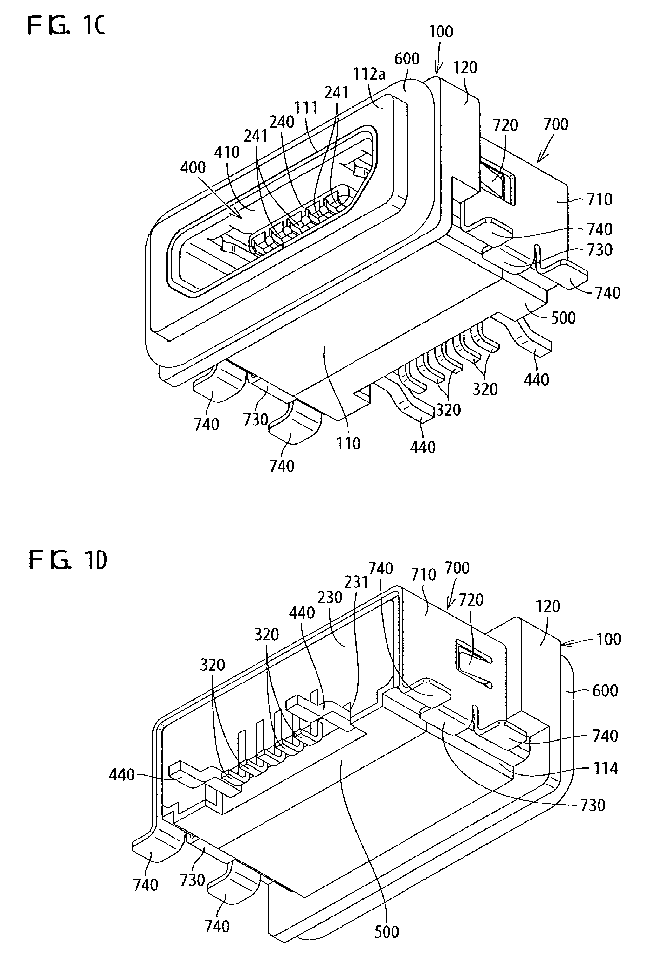

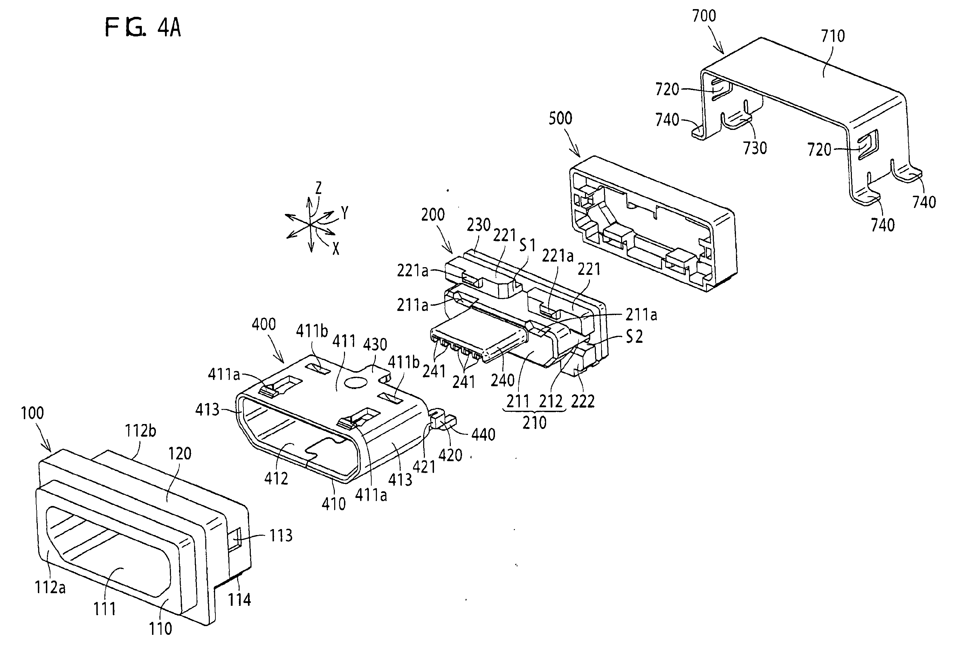

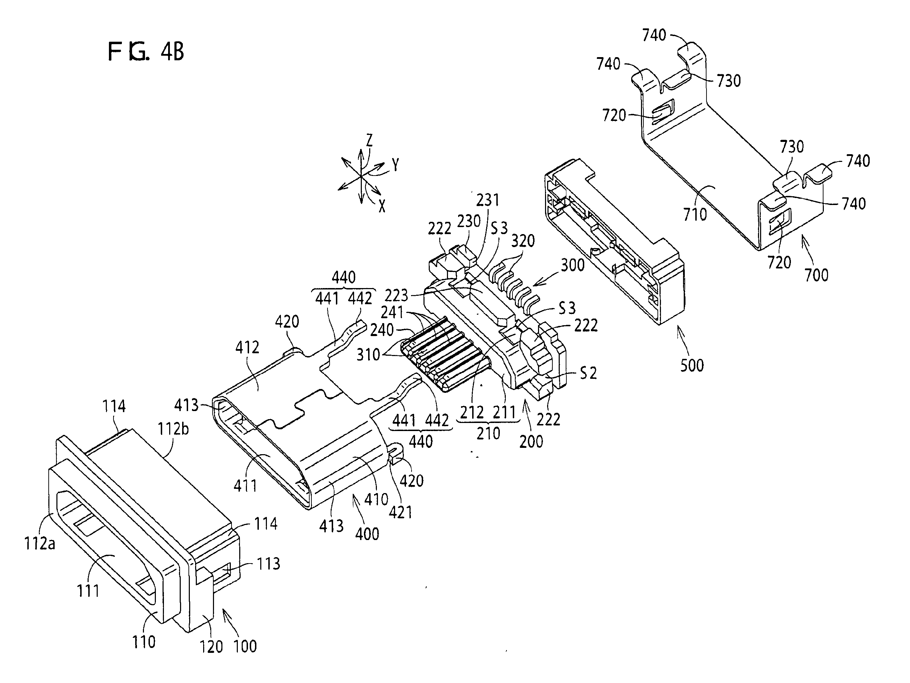

First, a connector according to Embodiment 1 of the invention will be described with reference to Figs. 1A to 4B. As shown in Figs. 1A to 2B, the connector includes a case 100, a body 200, a plurality of contacts 300, a shield case 400, an annular joint 500, a gasket 600, and a shield cover 700. The respective components of the connector will be described in detail below. It should be noted the widthwise, fore-aft, top-bottom directions of the connector is indicated as X, Y, and Z, respectively, in Figs. 4A and 4B. The Y direction is perpendicular to the X direction, and the Z direction is perpendicular to the X and Y directions.

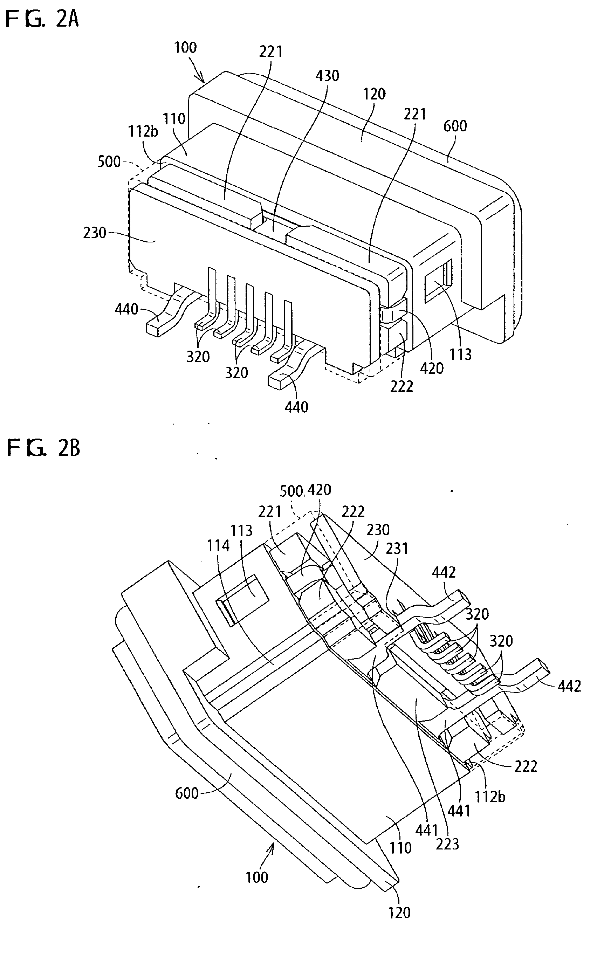

As shown in Figs. 2A, 2B, 4A, and 4B, the case 100 is a tube of an insulating resin such as a polyamide resin. The case 100 includes a tuboid case body 110 of tuboid shape, and a square annular frame 120 surrounding the case body 110. The case body 110 is provided with a through hole 111 passing through the case body 110 in the Y direction. As shown in Figs. 1A to 4B, a periphery 112a of the through hole 111 is provided on the front side (one side in the Y direction) of the case body 110, and a periphery 112b of the through hole 111 is provided on the rear side (the other side in the Y direction) of the case body 110. It should be appreciated that the rear side periphery 112b corresponds to the periphery of the through hole of the case as defined in the claims.

As shown in Figs. 1A to 2B, the gasket 600 fits around the case body 110. The gasket 600 can be interposed between the case body 110 and a housing (not shown) of an electronic device for mounting the connector. The gasket 600 interposed between the case body 110 and the housing can reduce intrusion of water, dust, or the like through between them into the electronic device.

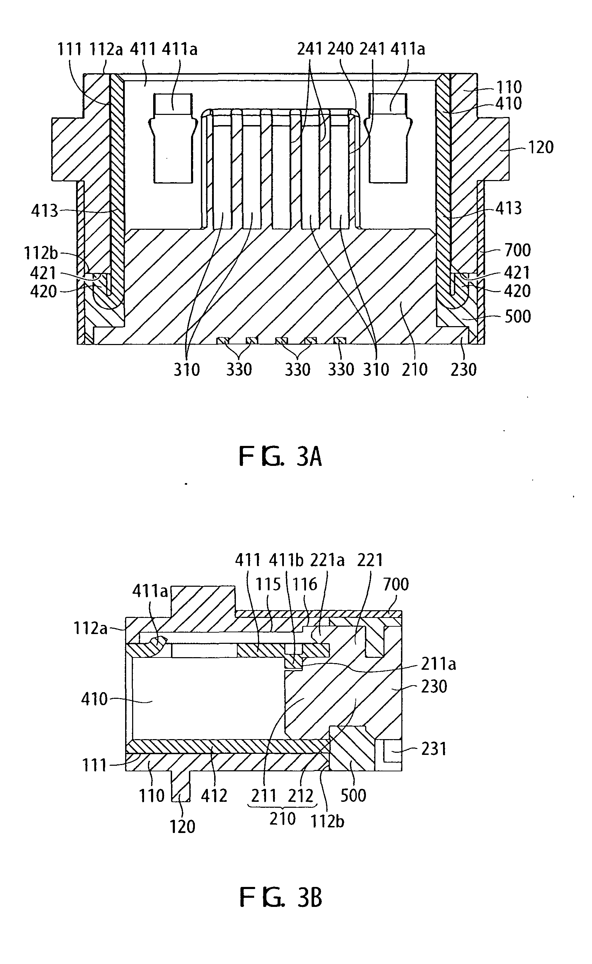

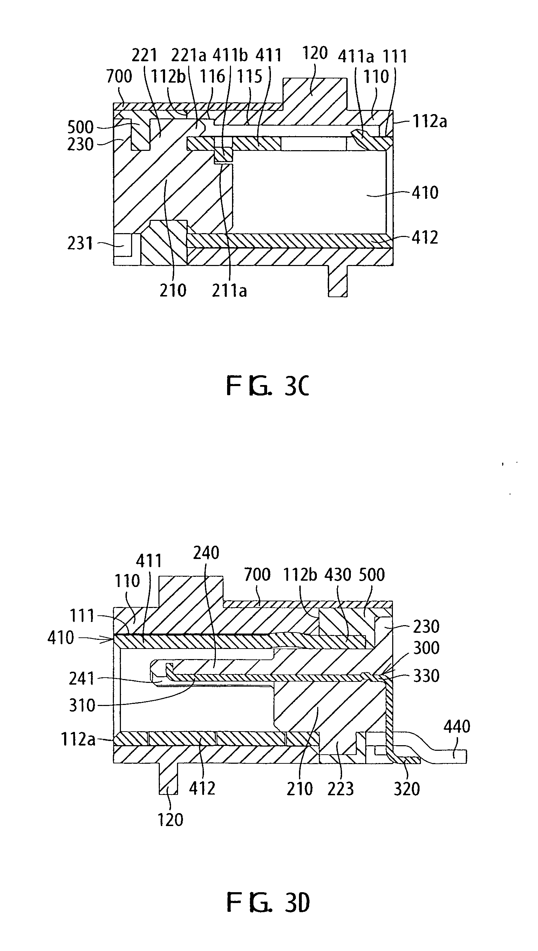

As shown in Figs. 2A and 2B, a pair of rectangular locking recesses 113 is provided in opposite end faces in the X direction of the case body 110. Opposite ends in the X direction of the lower end of the case body 110 is formed with a pair of locking grooves 114 extending in the Y direction. In the inner space of the case body 110, the ceiling is provided with a pair of grooves 115 extending in the Y direction and a pair of recesses 116 as shown in Figs. 3B and 3C. The recesses 116 communicate with the grooves 115 and are open out to the rear side of the case body 110.

The shield case 400 as shown in Figs. 4A and 4B is formed of an electrically conductive metal plate. The shield case 400 includes a tuboid portion 410, a pair of engaging portions 420, and a fixing portion 430, and a pair of connecting portions 440. The outer shape of the tuboid portion 410 conforms to the inner shape of the through hole 111 of the case body 110. The tuboid portion 410 accordingly fits in the through hole 111 of the case body 110.

The tuboid portion 410 includes a top plate 411, a bottom plate 412, and a pair of side plates 413. The top plate 411 is provided with a pair of lugs 411 a, and a pair of abutting-stops 411b as shown in Figs. 3B and 3C. The lugs 411a are formed by cutting portions of the top plate 411 and raising them upward (one side in the Z direction). The lugs 411a are received in the grooves 115 of the case body 110. The abutting-stops 411 b are provided behind the lugs 411a of the top plate 411 and project downward (in the other side in the Z direction).

As shown in Fig. 3A, the engaging portions 420 of generally U-shape are jointed to the rear ends of the side plates 413 of the tuboid portion 410 and folded back outward and forward. The engaging portions 420 have ends 421. The ends 421 are in abutment and engagement with the periphery 112b of the case body 110. As shown in Figs. 4A and 4B, the fixing portion 430 is a rectangular plate integrally formed or continuous with the rear end of the top plate 411 of the tuboid portion 410 and extends in the Y direction. The connecting portions 440 are arms continuous with the rear end of the bottom plate 412 of the tuboid portion 410 and extend in the Y direction. The connecting portions 440 each have a basal portion 441 and a distal portion 442. The connecting portions 440 are curved such that the lower surfaces of the distal portions 442 are at the same height position as the lower surfaces of tail portions 320 (to be described) of the contacts 300.

As shown in Figs. 4A and 4B, the body 200 is made of an insulating resin such as a polyamide resin. The body 200 includes a main body 210, a pair of abutting portions 221, a pair of abutting portions 222, an abutting portion 223, a rear plate 230, and a tongue 240.

The main body 210 is a block of an outer shape conforming to the inner shape of the tuboid portion 410 of the shield case 400. The main body 210 has a front portion 211 and a rear portion 212 integrally formed or continuous with the front portion 211. The front portion 211 fits in the tuboid portion 410. A pair of recesses 211 a is formed at the top of the front face of the front portion 211. The abutting-stops 411b of the shield case 400 are received in the recesess 211 a and abut the back faces of the recesses 211 a. This abutment reduces over-insertion of the main body 210 into the tuboid portion 410. In addition, the plate-shaped tongue 240 projects from the front portion 211. As shown in Fig. 3A, the tongue 240 is located in the tuboid portion 410. The lower face of the tongue 240 is formed with a plurality of accommodating grooves 241 extending in the Y direction.

On and around the outer circumferential surface of the rear portion 212, the pair of abutting portions 221, the pair of abutting portions 222, and the abutting portion 223 are circumferentially arranged at intervals. The abutting portions 221, the abutting portions 222, and the abutting portion 223 abut the periphery 112b of the case 100 and the rear face of the tuboid portion 410 of the shield case 400. The abutting portions 221 are each provided with a protrusion 221 a. As shown in Figs. 3B and 3C, the protrusions 221 a fit in the pair of recesses 116 of the case body 110. A space S1 is provided between the pair of abutting portions 221. A space S2 is provided between each of the pair of abutting portions 221 and each of the pair of abutting portions 222. A space S3 is provided between each of the pair of abutting portions 222 and the abutting portion 223. The fixing portion 430 of the shield case 400 is received in the space S1 and fits between the abutting portions 221. The engaging portions 420 are received in the spaces S2. The connecting portions 440 pass through the spaces S3, so that the basal portions 441 of the connecting portions 440 are located in the spaces S3. The rear plate 230 is integrally formed or continuous with the rear portion 212 of the main body 210. As shown in Figs. 2B, 3B, and 3C, there is a gap between the rear plate 230 and the abutting portions 221 and 222. A cutaway 231 is centrally provided in the lower end of the rear plate 230. The connecting portions 440 pass also through the cutaway 231.

The contacts 300 are formed of electrically conductive metal plates. As shown in Fig. 3D, the contacts 300 each include a contact portion 310, a tail portion 320, and an intermediate portion 330. The intermediate portions 330 are generally L-shaped plates securely embedded in the main body 210 and the rear plate 230 of the body 200. The other ends in the Y direction (rear ends) of the intermediate portions 330 project downward from the rear plate 230 to be disposed in the cutaway 231. The contact portions 310 are plates that are each continuous or integrally formed with one end in the Y direction (front end) of each of the intermediate portions 330 and extend in the Y direction to be received in the accommodating grooves 241 of the tongue 240. The contact portions 310 are disposed in and enclosed by the tuboid portion 410 of the shield case 400, so that the connector provides improved electromagnetic interference (EMI) characteristics. The tail portions 320 are plates that are each continuous or integrally formed with the other end in the Y direction (rear end) of each of the intermediate portions 330. The tail portions 320 are each bent substantially perpendicularly to the other end of each of the intermediate portions 330 and extend in the Y direction. The tail portions 320 are located on the opposite side of the intermediate portions 330 from the contact portions 310 in the Y direction (i.e. the intermediate portions 330 are located between the contact portions 310 and the tail portions 320 in the Y direction).

The annular joint 500 is an annular body of an insulating resin such as a polyamide resin as shown in Figs. 2A, 2B, 4A, and 4B. The annular joint 500 joins the periphery 112b of the case 100, the rear surface of the tuboid portion 410 of the shield case 400, and the outer circumferential surface of the rear portion 212 of the main body 210 of the body 200. The annular joint 500 covers the rear portion 212 of the body 200. The annular joint 500 has embedded therein the pair of abutting portions 221, the pair of abutting portions 222, the abutting portion 223, the rear plate 230, the engaging portions 420, the fixing portion 430, and the basal portions 441 of the connecting portions 440. In other words, the resin of the annular joint 500 is filled in the spaces S1 to S3 and the gap between the rear plate 230 and the abutting portions 221 and 222 in such a manner as to cover the pair of abutting portions 221, the pair of abutting portions 222, the abutting portion 223, the rear plate 230, the engaging portions 420, the fixing portion 430, and the basal portions 441 of the connecting portions 440. However, the rear face of the rear plate 230 is exposed from the annular joint 500 to the outside. The distal portions 442 of the connecting portions 440 project from the annular joint 500. That is, the connecting portions 440 extend through the annular joint 500. It should be noted that as shown in Figs. 4A and 4B, the annular joint 500 has an inner shape with projections and recesses conforming to the shapes of the pair of abutting portions 221, the pair of abutting portions 222, and the abutting portion 223 (the abutting portions 221, 222, 223 are disposed on the rear portion 212 of the main body 210), the rear plate 230, the pair of engaging portions 420, the fixing portion 430, the basal portions 441 of the pair of connecting portions 440, the spaces S1 to S3, and the gap between the rear plate 230 and the abutting portions 221 and 222.

The shield cover 700 is an electrically conductive metal plate formed into a generally downward U-shape as shown in Figs. 4A and 4B. The shield cover 700 includes a cover body 710 of generally U-shape, a pair of first locking pieces 720, a pair of second locking pieces 730, and four connecting pieces 740. The cover body 710 has a top plate and a pair of side plates. The side plates are continuous with ends in the X direction of the top plate and bent perpendicularly to the top plate. The cover body 710 is placed on the rear portion of the case body 110 of the case 100 and on the annular joint 500. The cover body 710 in this state covers the intermediate portions 330 of the contacts 300. The first locking pieces 720 are formed by cutting and bending inward portions of the side plates of the cover body 710. The first locking pieces 720 are locked in the locking recess 113 of the case body 110. The second locking pieces 730 are continuous with the centers at the lower ends of the side plates of the cover body 710 and are bent inward to extend perpendicularly to the side plates. The second locking pieces 730 are locked in the locking grooves 114 of the case body 110. Each pair of the four connecting pieces 740 is continuous with the lower end of each of the side plates of the cover body 710 and bent outward to extend perpendicularly to the side plate. The lower surfaces of the connecting pieces 740 are located at the same height position as the lower surfaces of the tail portions 320 of the contacts 300.

The connector configured as described above may be manufactured in the following steps. The first step is to press-form the contacts 300 out of a metal plate. Thereafter, the contacts 300 are put into a die (not shown), into which an insulating resin is poured for performing insert molding. The insulating resin is molded into the body 200, in which the intermediate portions 330 of the contacts 300 are securely embedded in the main body 210 and the rear plate 230. The contact portions 310 are received in the respective accommodating grooves 241 of the tongue 240 of the body 200. The tail portions 320 are arranged behind the lower end of the rear plate 230 of the body 200.

The next step is to press-form the shield case 400 out of a metal plate. Into the tuboid portion 410 of the shield case 400 are inserted the tongue 240 of the body 200 and the front portion 211 of the main body 210. Accordingly, the front portion 211 of the body 200 fits in the tuboid portion 410 of the shield case 400, and the tongue 240 and the contact portions 310 of the contacts 300 are located inside the tuboid portion 410. Also, the abutting portions 221, 222, and 223 of the body 200 abut the rear face of the tuboid portion 410 of the shield case 400. The abutting-stops 411b of the shield case 400 are inserted into the recesses 211a of the body 200 and abut the back surfaces of the recesses 211 a. The fixing portion 430 of the shield case 400 fits between the pair of abutting portions 221. The pair of engaging portions 420 of the shield case 400 are inserted into the spaces S2 between the pair of abutting portions 221 and the pair of abutting portions 222. The connecting portions 440 of the shield case 400 pass through the spaces S3 between the pair of abutting portions 222 and the abutting portion 223 such that the basal portions 441 of the connecting portions 440 are located in the spaces S3.

The next step is to prepare the case 100 by injection molding, i.e. by pouring an insulating resin into a die not shown. The gasket 600 is fittingly placed around the case body 110 of the case 100. The tuboid portion 410 of the shield case 400 is then fittingly placed into the through hole 111 of the case 100. In this state, the abutting portions 221, 222, and 223 of the body 200 abut the periphery 112b of the case 100, and the engaging portions 420 of the shield case 400 also abut the periphery 112b of the case 100. The protrusions 221a of the body 200 fit in the recesses 116 of the case 100. Also, the tongue 240 of the body 200, the contact portions 310 of the contacts 300, and the front portion 211 of the main body 210 are located inside the through hole 111 of the case 100.

After the case 100, the body 200, the contacts 300, and the shield case 400 are combined as described above, they are put into a die (not shown), and an insulating resin is poured into space around the outer circumferential surface of the rear portion 212 of the main body 210, i.e. the outsert molding process is performed. The molded insulating resin forms the annular joint 500, which exists around the outer circumferential surface of the rear portion 212 of the main body 210. The annular joint 500 serves to join the outer circumferential surface of the rear portion 212 of the main body 210 to the periphery 112b of the case 100 and the rear face of the tuboid portion 410 of the shield case 400. The annular joint 500 has embedded therein (accommodates) the pair of abutting portions 221, the pair of abutting portions 222, the abutting portion 223, the rear plate 230, the pair of engaging portions 420, the fixing portion 430, and the basal portions 441 of the pair of connecting portions 440.

The next step is to press-form the shield cover 700 out of a metal plate. The pair of second locking pieces 730 of the shield cover 700 is then inserted into the pair of locking grooves 114 of the case 100. The first locking pieces 720 of the shield cover 700 are thus locked in the locking recesses 113 of the case 100. The cover body 710 of the shield cover 700 is thus placed on the rear portion of the case body 110 and the annular joint 500.

The connector may be thus assembled and mounted onto a circuit board of an electronic device in the following steps. First, the connector is placed onto the circuit board. At this time, the tail portions 320 of the contacts 300 are brought into contact with associated signal electrodes on the circuit board. The connecting portions 440 of the shield case 400 are brought into contact with associated ground electrodes on the circuit board. The connecting pieces 740 of the shield cover 700 are brought into contact with associated ground electrodes on the circuit board. Thereafter, the tail portions 320 of the contacts 300 are soldered to the associated signal electrodes of the circuit board. The connecting portions 440 of the shield case 400 are soldered to the associated ground electrodes of the circuit board. The connecting pieces 740 of the shield cover 700 are soldered to the associated ground electrodes of the substrate.

The connector may be connected to a mating plug connector in the following manner. The plug is inserted into the tuboid portion 410 of the connector. Then, contacts of the plug are brought into contact with the associated contact portions 310 of the contacts 300 of the connector. The connector is thus electrically connected to the mating plug.

The above-described connector has many advantageous features. First, the annular joint 500 joins the rear portion 212 of the main body 210 to the periphery 112b of the through hole 111 of the case 100 and the rear face of the tuboid portion 410 of the shield case 400. Therefore, the connector can reduce intrusion of water and dust through between the body 200 and the case 100, through between the body 200 and the tuboid portion 410 of the shield case 400, and through between the case 100 and the tuboid portion 410 of the shield case 400. Also, the annular joint 500 is formed around the rear portion 212 of the main body 210 by outsert molding. Therefore, the connector can provide favorable waterproofness and dustproofness at low cost.

Further, the annular joint 500 has embedded therein (accommodates) the pair of abutting portions 221, the pair of abutting portions 222, the abutting portion 223, the rear plate 230, the pair of engaging portions 420, the fixing portion 430, and the basal portions 441 of the pair of connecting portions 440. The annular joint 500 thus provides improved joining strength of the rear portion 212 of the main body 210 with respect to the tuboid portion 410 of the shield case 400 and the periphery 112b of the case 100. In addition, when the tuboid portion 410 of the shield case 400 fits in the through hole 111 of the case 100, the abutting portions 221, 222, and 223 of the body 200 abut the periphery 112b of the case 100, the engaging portions 420 of the shield case 400 abut the periphery 112b of the case 100, and the protrusions 221a of the body 200 fit in the recesses 116 of the case 100. It is therefore easy to position the body 200 and the shield case 400 with respect to the case 100.

Also, at least one of the case 100, the body 200, and the annular joint 500 may be made of a polyamide resin. Polyamide resins generally provide favorable adherence to other kinds of resin materials and metals. The connector including polyamide resin components can provide improved waterproofness and dustproofness. Further, polyamide resins generally provide favorably high rigidity than other resin materials. Therefore, the connector including polyamide resin components can provide an improved prying resistance.

### Embodiment 2

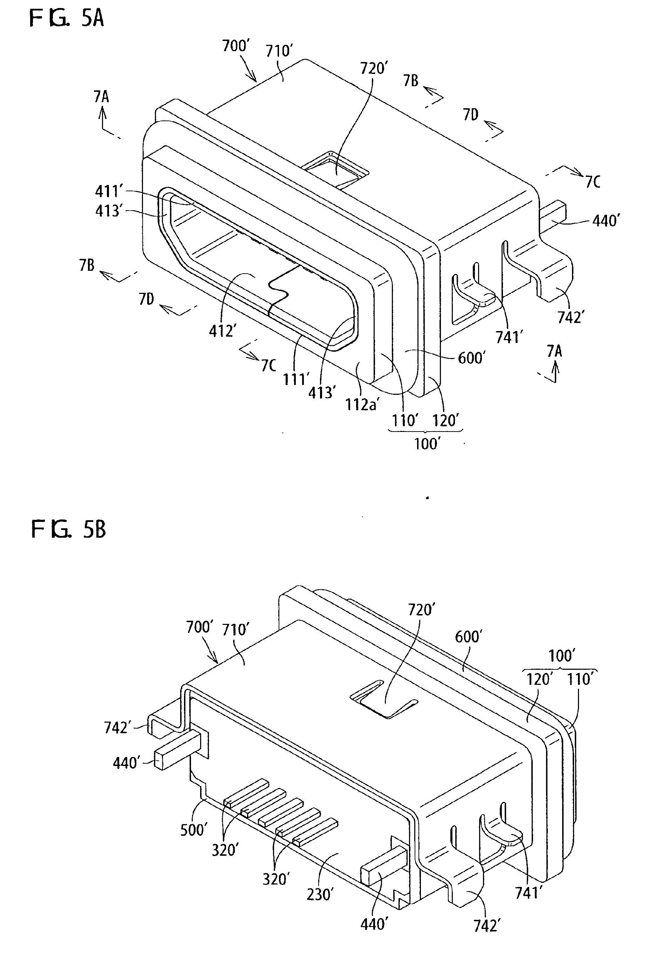

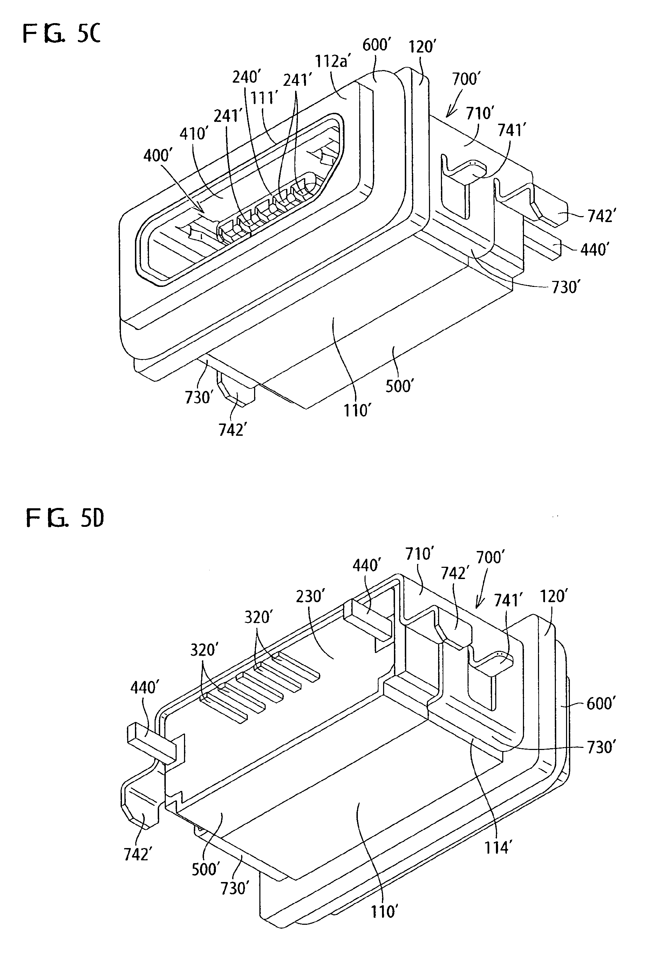

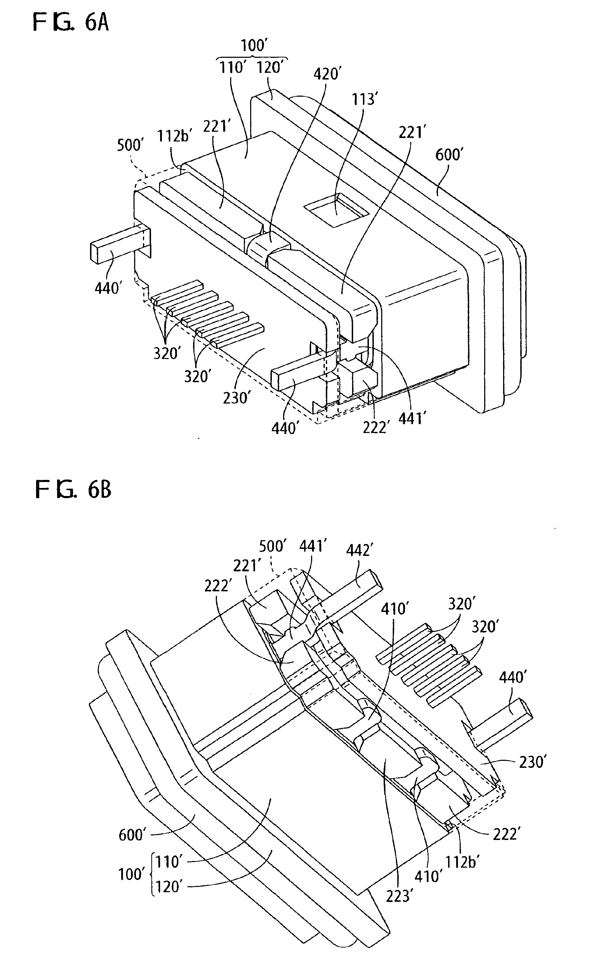

Next, a connector according to Embodiment 2 of the invention will be described with reference to Figs. 5A to 8B. The connector shown in Figs. 5A to 6B is different from the connector of Embodiment 1 in that this connector is of a mid-mount type, i.e. the connector is connected to a circuit board as fitting in a recess or hole of the circuit board. More specifically, the connector has the same configuration as the connector of Embodiment 1 except that a case 100', a body 200', contacts 300', a shield case 400', an annular joint 500', and a shield cover 700' are of different shape from the corresponding components of the connector of Embodiment 1 for adaptation to the mid-mount type. Only the differences will be described in detail below, and the configurations common to Embodiment 1 will not be described. The case, the body, the contacts, the shield case, the annular joint, and the shield cover of this connector and their subcomponents will be referred to with reference numerals added with a symbol _'_ for the sake of distinction from the case, the body, the contacts, the shield case, the annular joint, and the shield cover of Embodiment 1.

The case 100' has the same configuration as the case 100 with one difference. Particularly, a case body 110' is provided with a single locking recess 113' in its upper face, not a pair of locking recesses in end faces in the X direction of the case body. Figs. 5A to 8B also illustrate a frame 120', a through hole 111', peripheries 112a' and 112b' of the through hole, locking grooves 114', grooves 115', and recesses 116'.

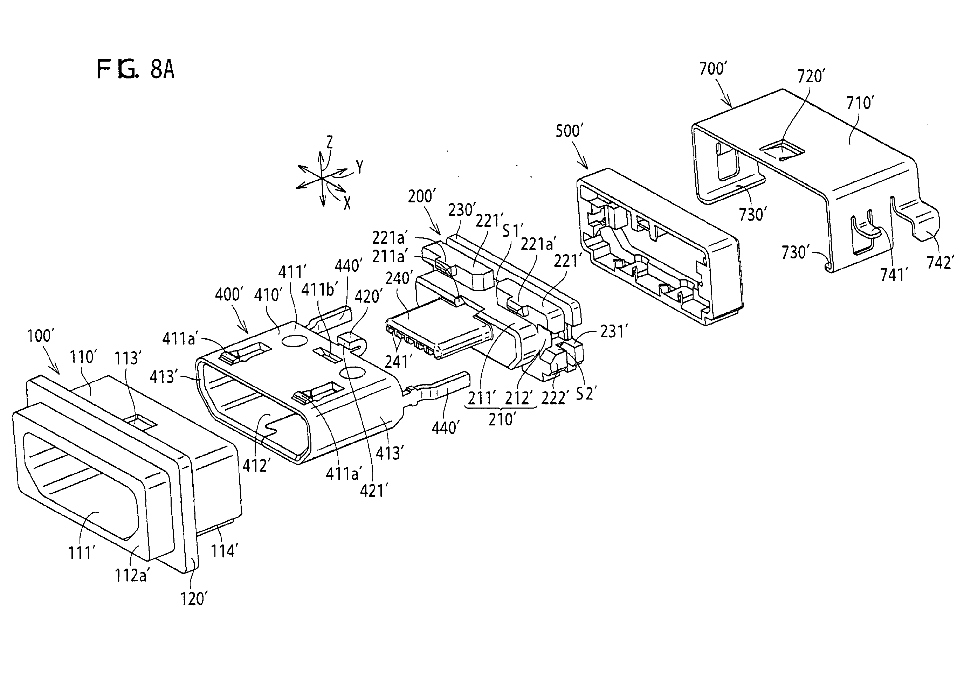

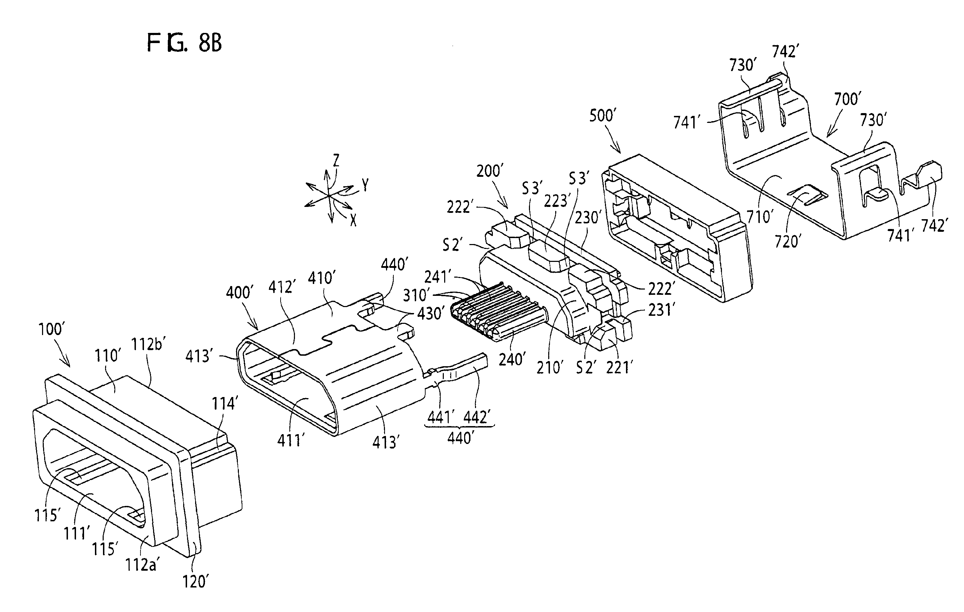

The shield case 400' is formed of an electrically conductive metal plate. As shown in Figs. 8A and 8B, the shield case 400' has a tuboid portion 410', an engaging portion 420', a pair of fixing portions 430', and a pair of connecting portions 440'. The tuboid portion 410' has the same configuration as the tuboid portion 410 with one difference. The difference is that one abutting-stop 411b' is provided centrally in the rear portion of a top plate 411'.

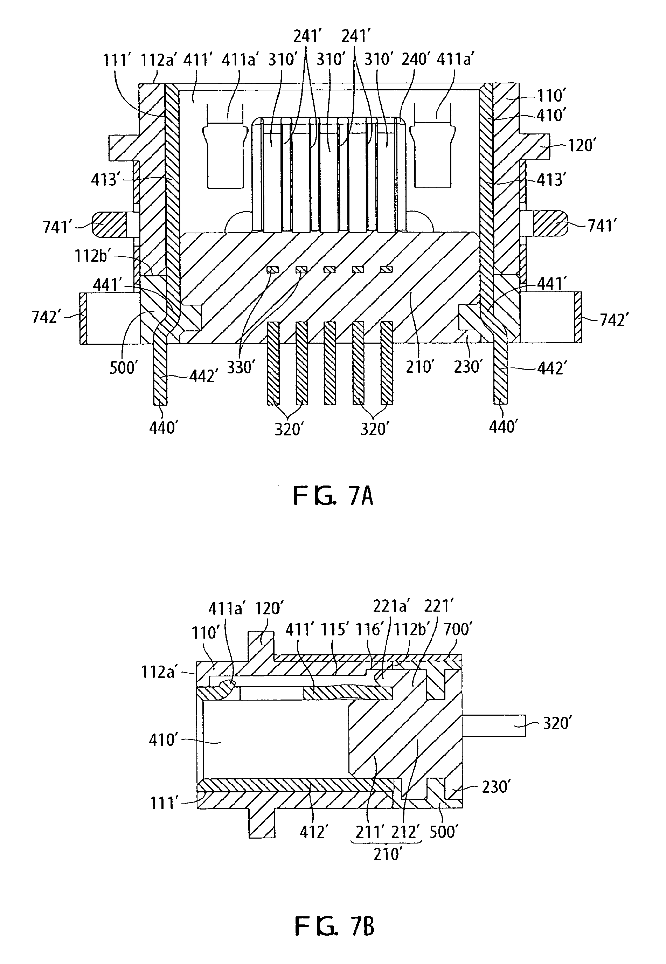

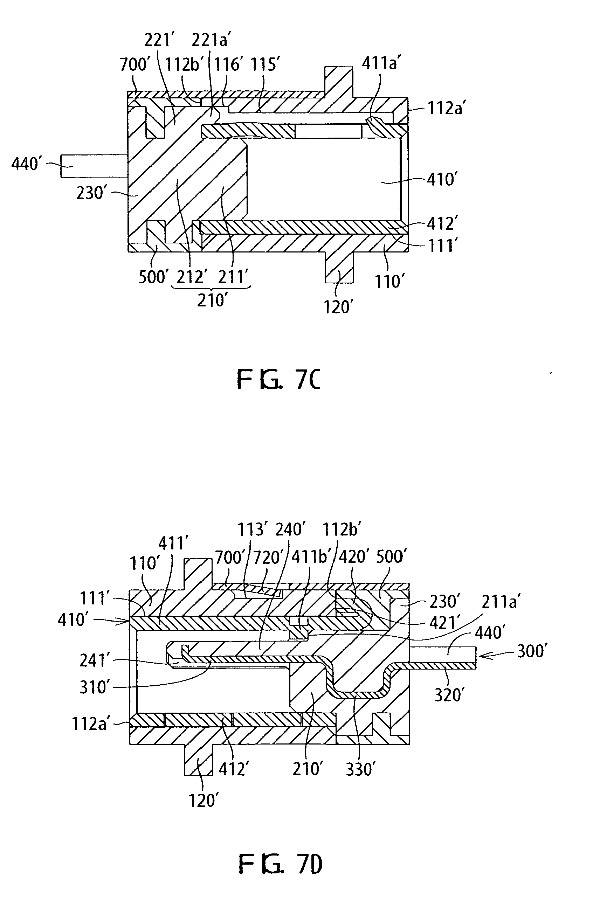

The engaging portion 420' is a piece of generally U-shape, which is continuous with the center of the rear end of the top plate 411' of the tuboid portion 410' and is folded back upward and forward. As shown in Fig. 7D, the engaging portion 420' is received in a space S1' between a pair of abutting portions 221' of the body 200'. An end 421' is in abutment and engagement with the periphery 112b' of the case body 110'. The pair of fixing portions 430' is rectangular plates continuous with the rear end of a bottom plate 412' of the tuboid portion 410' and extend in the Y direction. The fixing portions 430' are each received in a space S3' between each of a pair of abutting portions 222' and an abutting portion 223' so as to fit between each of the abutting portions 222' and the abutting portion 223'. The pair of connecting portions 440' are arms continuous with the rear ends of a pair of side plates 413' of the tuboid portion 410' and extend in the Y direction. The connecting portions 440' have basal portions 441' and distal portions 442'. The connecting portions 440' are each placed through a space S2' between each of the pair of abutting portions 221' and each of the pair of abutting portions 222'. The basal portions 441' of the connecting portions 440' are located in the spaces S2'. The basal portions 441' are embedded in the annular joint 500', and the distal portions 442' project from the annular joint 500'. That is, the connecting portions 440' pass through the annular joint 500'. The lower surfaces of the distal portions 442' of the connecting portions 440' are located at same height position as the lower surfaces of tail portions 320' of the contacts 300'.

The body 200' has the same configuration as the body 200 except the following two points. The first difference is that a single recess 211a' is provided at the top center of a front portion 211' of a main body 210'. As in Embodiment 1, the abutting-stop 411b' is received in the recess 211 a' and abuts the back face of the recess 211 a'. The second difference is that a pair of cutaways 231' is provided at ends in the X direction of the rear plate 230'. The cutaways 231' are positioned corresponding to the spaces S2' at ends of the rear plate 230'. It is therefore possible to insert the connecting portions 440' through the spaces S2' and the cutaways 231'. Figs. 5A to 8B also illustrate a tongue 240' and accommodating grooves 241'.

The contacts 300' are formed of electrically conductive metal plates. As shown in Fig. 7D, the tail portions 320' and intermediate portions 330' of the contacts 300' are of different shape from the tail portions 320 and the intermediate portions 330 of the contacts 300, respectively. Except for this, the contacts 300' have the same configuration as the contacts 300. The intermediate portions 330' are each a plate with a generally U-shaped curve at its center and are securely embedded in the main body 210' and the rear plate 230' of the body 200'. The tail portions 320' are straight plates that are each continuous with the other end in the Y direction (rear end) of each of the intermediate portions 330'. The tail portions 320' extend in the Y direction and project from the rear plate 230' to the other side in the Y direction (rear side).

As in Embodiment 1, the annular joint 500' is an annular body of an insulating resin such as a polyamide resin. The annular joint 500' is different from the annular joint 500 in its inner shape. The annular joint 500' has an inner shape with projections and recesses conforming to the shapes of the pair of abutting portions 221', the pair of abutting portions 222', and the abutting portion 223' (the abutting portions 221', 222', 223' are disposed on a rear portion 212' of the main body 210'), the rear plate 230', the engaging portion 420', the pair of fixing portions 430', the basal portions 441' of the pair of connecting portions 440', the spaces S1' to S3', and a gap between the rear plate 230' and the projections (the abutting portions 221', 222', and 223') on the rear portion 212' of the main body 210'. The abutting portions 221', 222', and 223', the rear plate 230', the engaging portion 420', the pair of fixing portions 430', and the basal portions 441' of the pair of connecting portions 440' are embedded in the annular joint 500'. Except for these differences, the annular joint 500' has the same configuration as the annular joint 500.

As shown in Figs. 8A and 8B, the shield cover 700' is an electrically conductive metal plate formed into a generally downward U-shape. The shield cover 700' has a cover body 710' of a generally U-shape, a first locking piece 720', a pair of second locking pieces 730', a pair of connecting pieces 741', and a pair of connecting pieces 742'. The cover body 710' has a top plate and a pair of side plates. The side plates are continuous with ends in the X direction of the top plate and bent perpendicularly to the top plate. The cover body 710' is placed on the rear portion of the case body 110' of the case 100' and on the annular joint 500'. The first locking piece 720' is formed by cutting and bending inward a portion of the top plate of the cover body 710'. The first locking piece 720' is locked in the locking recess 113' of the case body 110'. The second locking pieces 730' are continuous with the lower ends of the side plates of the cover body 710 and are bent inward, i.e. perpendicularly to the side plates. The second locking pieces 730' are locked in the locking grooves 114' of the case body 110'. The connecting pieces 742' are formed by cutting the rear portions of the side plates of the cover body 710' and bending them in generally L shapes. The connecting pieces 741' are formed by cutting portions of the front portions of the side plates of the cover body 710' and bending them outward.

The connector having the above configuration may be assembled in similar steps as in the connector of Embodiment 1. The assembled connector may be mounted onto a circuit board of an electronic device in the following steps. First, the connector is placed in a recess or hole of the circuit board. Then, the tail portions 320' of the contacts 300' are brought into contact with signal electrodes on the edge of the recess or hole of the circuit board. The connecting portions 440' of the shield case 400' are brought into contact with associated ground electrodes provided on the edge of the recess or hole of the circuit board. The connecting pieces 741' of the shield cover 700' are brought into contact with associated ground electrodes on the edge of the recess or hole of the circuit board. The connecting pieces 742' of the shield cover 700' are inserted into through holes or engaging holes formed in the edge of the recess or hole of the circuit board. Thereafter, the tail portions 320' of the contacts 300' are soldered to the signal electrodes of the circuit board. The connecting portions 440' of the shield case 400' are soldered to the associated ground electrodes of the circuit board. The connecting pieces 741' of the shield cover 700' are soldered to the associated ground electrodes of the circuit board. The connecting pieces 742' of the shield cover 700' are soldered to the through holes of the circuit board. In a case where they are inserted into not the through holes but the engaging holes of the circuit board, the connecting pieces 742' of the shield cover 700' may not be electrically connected to the circuit board.

The connector may be connected to a mating plug connector in the following manner. The plug is inserted into the tuboid portion 410' of the connector. Then, contacts of the plug are brought into contact with the associated contact portions 310' of the contacts 300' of the connector. The connector is thus electrically connected to the mating plug.

The above-described connector has many advantageous features. First, the annular joint 500' joins the rear portion 212' of the main body 210' to the periphery 112b' of the through hole 111' of the case 100' and the rear face of the tuboid portion 410' of the shield case 400'. Therefore, the connector can reduce intrusion of water and dust through between the body 200' and the case 100', through between the body 200' and the tuboid portion 410' of the shield case 400', and through between the case 100' and the tuboid potion 410' of the shield case 400'. Also, the annular joint 500' is formed around the rear portion 212' of the main body 210' by outsert molding. Therefore, the connector can provide favorable waterproofness and dustproofness at low cost.

Further, the annular joint 500' has embedded therein (accommodates) the pair of abutting portions 221', the pair of abutting portions 222', the abutting portion 223', the rear plate 230', the engaging portion 420', the pair of fixing portions 430', and the basal portions 441' of the pair of connecting portions 440'. The annular joint 500' thus provides improved joining strength in joining the rear portion 212' of the main body 210' to the tuboid portion 410' of the shield case 400' and the periphery 112b' of the case 100'. In addition, when the tuboid portion 410' of the shield case 400' fits in the through hole 111' of the case 100', the abutting portions 221', 222', and 223' of the body 200' abut the periphery 112b' of the case 100', the engaging portion 420' of the shield case 400' abuts the periphery 112b' of the case 100', and the protrusions 221a' of the body 200' fit in the recess 116' of the case 100'. It is therefore easy to position the body 200' and the shield case 400' with respect to the case 100'.

Also, at least one of the case 100', the body 200', and the annular joint 500' may be made of a polyamide resin. Polyamide resins generally provide favorable adherence to other kinds of resin materials and metals. The connector including polyamide resin components can provide improved waterproofness and dustproofness. Further, polyamide resins generally provide favorably high rigidity than other resin materials. Therefore, the connector including polyamide resin components can provide improved prying resistance.

Also, the intermediate portions 330' of the contacts 300' have curved centers of generally U-shape and are embedded in the main body 210' and the rear plate 230' of the body 200'. It is therefore possible to increase the surface distances (contact areas) of the intermediate portions 330' with respect to the body 200'. Therefore, even when a very narrow gap exists along the boundary of any intermediate portion 330' and the resin of the body 200', the gap should be lengthened in accordance with the increase of the surface distance. Also, the gap is not straight but curved along the intermediate portion 330'. Therefore, the connector can reduce intrusion of water and dust through the gap if any. Consequently, the connector provides favorably improved waterproofness and dustproofness.

### Embodiment 3

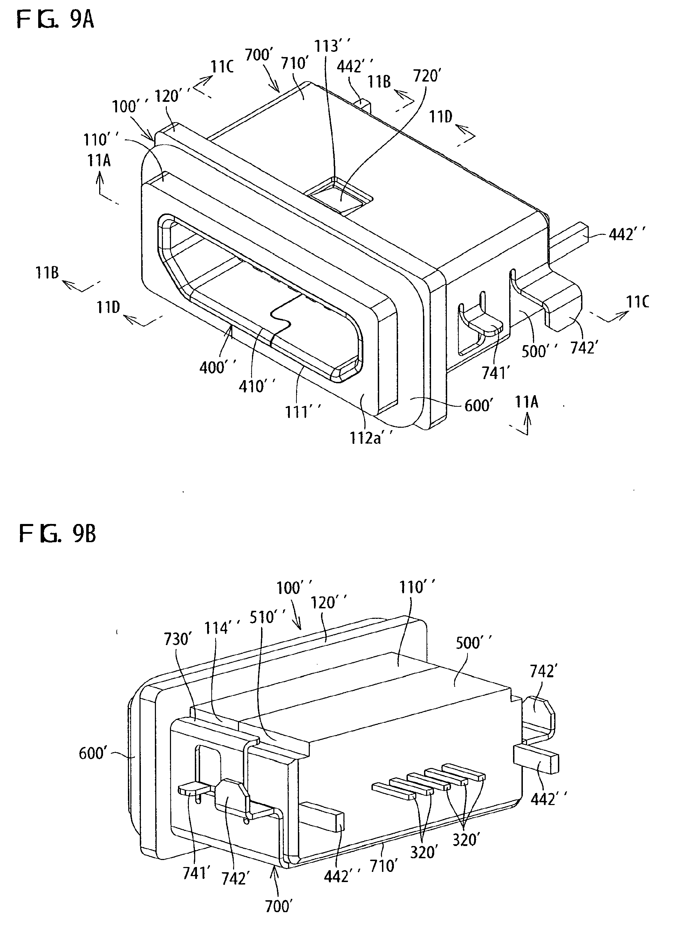

Next, a connector according to Embodiment 3 of the invention will be described with reference to Figs. 9A to 12B. The connector shown in Figs. 9A and 9B has substantially the same configuration as the connector of Embodiment 2 except that a case 100", a body 200", a shield case 400", and an annular joint 500" are of different shapes from the corresponding components of the connector of Embodiment 2. Only the differences will be described in detail below, and the configurations common to Embodiment 2 will not be described. The case, the body, the contacts, the shield case, the annular joint, and the shield cover of this connector and their subcomponents will be referred to with reference numerals added with a symbol _"_ for the sake of distinction from those of Embodiment 2.

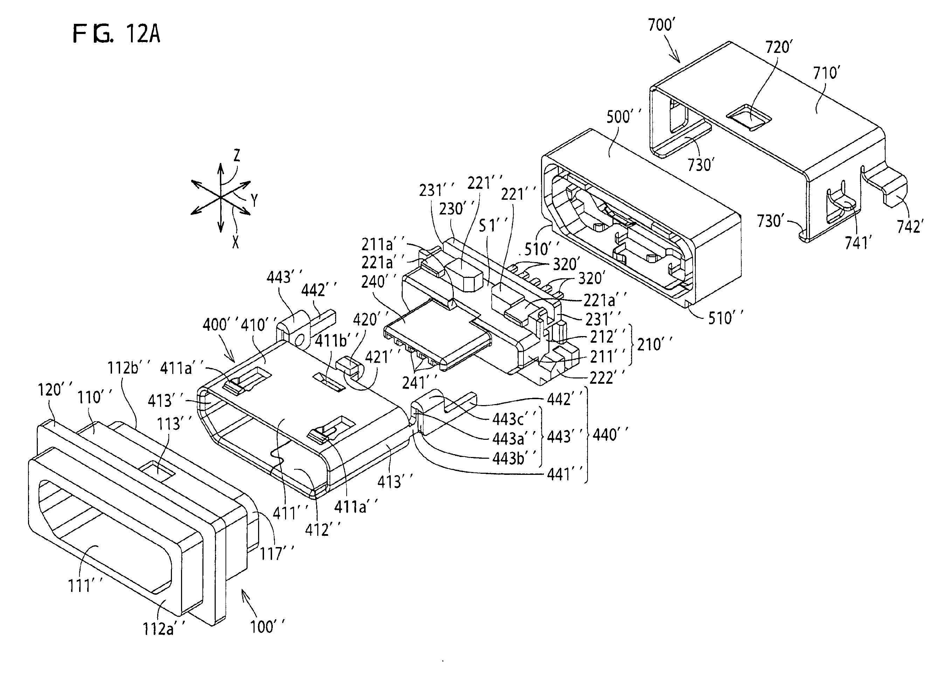

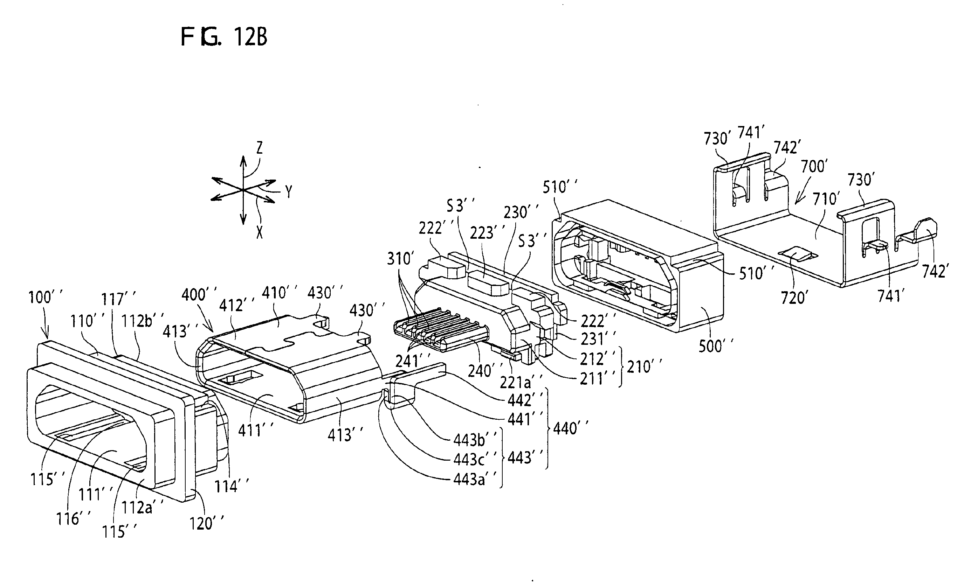

As shown in Figs. 12A and 12B, the case 100" has substantially the same configuration as the case 100', except that a case body 110" further includes a connecting protrusion 117" provided on the rear portion of the case body 110". The connecting protrusion 117" is a tube of outer size smaller than the rear portion of the case body 110". A through hole 111" passes through the case body 110" (including the connecting protrusion 117") in the Y direction. The periphery of the through hole 111" of the connection protrusion 117" forms a periphery 112b" on the rear side of the through hole 111". A frame 120" is provided so as to fit around the front portion of the case body 110". Figs. 9A to 12B also illustrate a periphery 112a" of the through hole, a locking recess 113", locking grooves 114', grooves 115", and recesses 116". In Embodiment 3, each of the grooves 115" and each of the recess 116" forms a continuous rectangular long groove.

As shown in Figs. 12A and 12B, the shield case 400" has substantially the same configuration as the shield case 400' except that a pair of connecting portions 440" is of different shape from the pair of connecting portions 440'. Figs. 9A to 12B also illustrate a tuboid portion 410"; a top plate 411 ", a bottom plate 412", and side plate 413" of the tuboid portion; lugs 411 a"; an abutting-stop 411b"; an engaging portion 420", an end 421" of the engaging portion; and fixing portions 430".

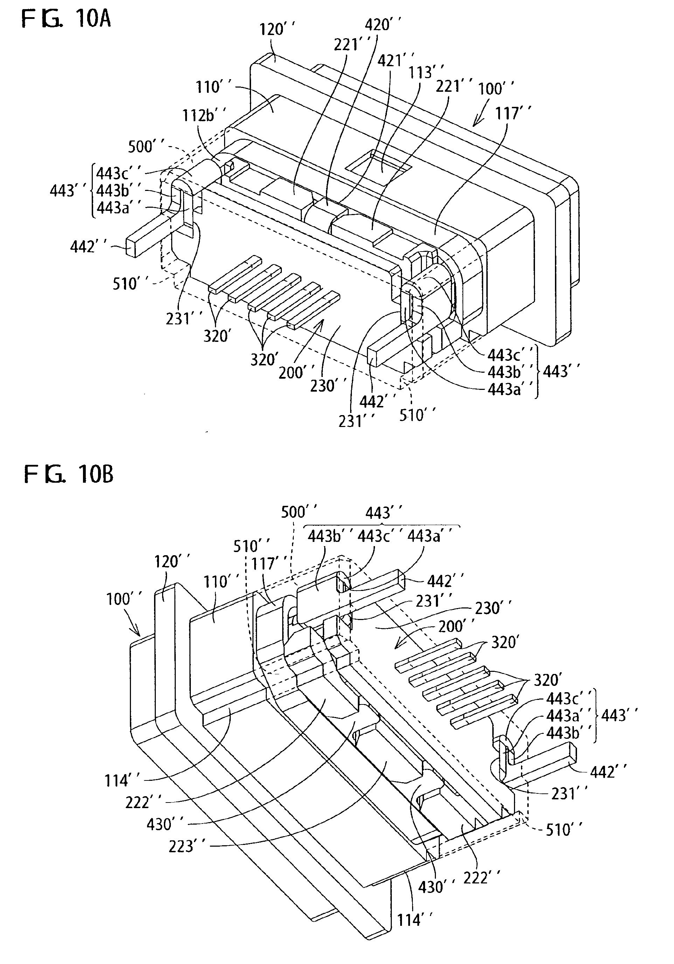

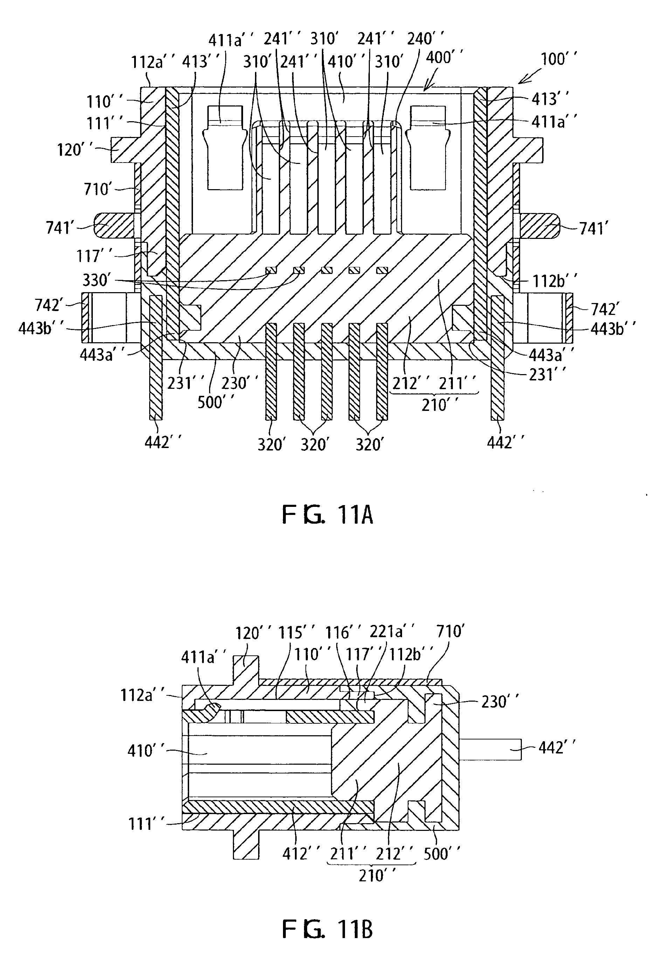

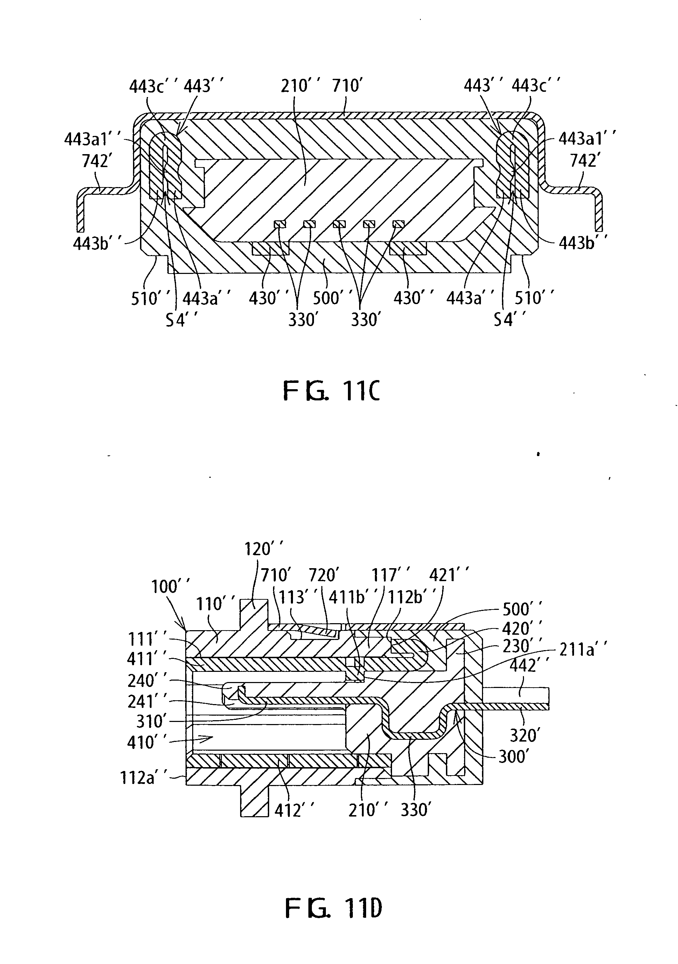

As shown in Figs. 10A, 10B, 12A, and 12B, the connecting portions 440" each include a basal portion 441", a distal portion 442", and a curved portion 443". The basal portion 441" is a plate continuous with the rear end of the associated side plate 413" of the tuboid portion 410". The curved portion 443" is a generally U-shaped plate bridging between the basal portion 441" and the distal portion 442" and curved such that the basal portion 441" and the distal portion 442" are not arranged in a straight line. The curved portion 443" include a first opposed portion 443a" and a second opposed portion 443b" that face each other, and a generally U-shaped folded portion 443c" provided between the first opposed portion 443a" and the second opposed portion 443b" (see Figs. 11A and 11C). The first opposed portions 443a" is a plate provided between one end of the associated folded portion 443c" and the associated basal portion 441". The first opposed portion 443a" extends in the Z direction, i.e. substantially perpendicularly to the basal portion 441". The second opposed portion 443b" is a plate extending also in the Z direction from the other end of each of the folded portions 443c" and along the associated first opposed portions 443a". The first opposed portion 443a" includes a protrusion 443a1" projecting toward the associated second opposed portion 443b" (see Fig. 11C). The protrusion 443a1" abuts the second opposed portion 443b" such that a space S4" is created between the first opposed portion 443a" and the second opposed portion 443b". The distal portion 442" is a plate continuous with the associated second opposed portion 443b" and extends in the Y direction, i.e. substantially perpendicularly to the second opposed portion 443b". The distal portion 442" and the basal portion 441" are both oriented in the Y direction, but they are shifted from each other in the X direction (i.e., the distal portion 442" and the basal portion 441" are not located on a straight line in the Y direction). The lower surfaces of the distal portions 442" are at the same height position as the lower surfaces of the tail portions 320' of the contacts 300'.

As shown in Figs. 12A and 12B, the body 200" has substantially the same configuration as the body 200' except the following two points. The first difference is that the abutting portions 221" are cut away at their outer ends. As shown in Fig. 11D, a space S1" is provided between the abutting portions 221" to receive the engaging portion 420" of the shield case 400". The abutting portions 221" are provided with protrusions 221a" similarly to the abutting portions 221'. The protrusions 221a" fit in the recesses 116" of the case 100" (see Fig. 11B).

The second difference is that a pair of cutaways 231" is provided at ends in the X direction of a rear plate 230" and open upward (one side in the Z direction). The cutaways 231 ", the cutaways of the abutting portions 221 ", and outer spaces at ends in the X direction of a rear portion 212" of a main body 210" serve as an accommodating space for accommodating the basal portions 441" and the curved portions 443" of the connecting portions 440". Figs. 9A to 12B also illustrate a front portion 211" of the main body, abutting portions 222" and 223", a tongue 240", and accommodating grooves 241". Spaces S3" are provided between the pair of abutting portions 222" and the abutting portion 223".

As in Embodiment 2, the annular joint 500" is an annular body formed by outsert molding an insulating resin such as a polyamide resin as shown in Figs. 10A, 10B, 12A, and 12B. The annular joint 500" has substantially the same configuration as the annular joint 500', except that it is an annular body with a bottom and the following two points.

Particularly, the annular joint 500" has embedded therein the connecting protrusion 117" of the case 100", the pair of abutting portions 221 ", the pair of abutting portions 222", the abutting portion 223", and the rear plate 230" of the body 200", the engaging portion 420" of the shield case 400", the fixing portions 430", the basal portions 441" of the connecting portions 440", and the curved portions 443" of the connecting portions 440". Accordingly, the annular joint 500" has an inner shape with projections and recesses conforming to the shapes of the pair of abutting portions 221 ", the pair of abutting portions 222", and the abutting portion 223" (the abutting portions 221 ", 222", 223" are disposed on a rear portion 212" of the main body 210'), the rear plate 230", the engaging portion 420", the pair of fixing portions 430", the basal portions 441" of the pair of connecting portions 440", the curved portions 443", the space S1", the space S3", the space S4", and a gap between the rear plate 230" and the projections (the abutting portions 221 ", 222", and 223") on the rear portion 212" of the main body 210". Note that the resin of the annular joint 500" is filled in the space S1", the space S3", the space S4", and the gap.

The other difference is that the rear face of the rear plate 230" is embedded in the annular joint 500". In other words, the bottom of the annular joint 500" covers the rear face of the rear plate 230". Ends in the X direction of the lower end of the annular joint 500" are provided with a pair of locking grooves 510" extending in the Y direction and communicating with the locking grooves 114". The locking grooves 114" and 510" serve to lock second locking pieces 730' of the shield cover 700'.

The connector having the above configuration may be assembled in the following steps. The first step is to press-form the contacts 300' out of a metal plate. Thereafter, the contacts 300' are put into a die (not shown) to pour an insulating resin thereinto for insert molding. The insulating resin is molded as the body 200", in which the intermediate portions 330' of the contacts 300' are securely embedded in the main body 210" and the rear plate 230" (see Fig. 11D). The contact portions 310' are inserted into the respective accommodating grooves 241" of the tongue 240" of the body 200". The tail portions 320' accordingly project from the rear plate 230" of the body 200".

The next step is to press-form the shield case 400" out of a metal plate. Into the tuboid portion 410" of the shield case 400" are inserted the tongue 240" of the body 200" and the front portion 211" of the main body 210". Accordingly, the front portion 211" of the body 200" fits in the tuboid portion 410" of the shield case 400", and the tongue 240" and the contact portions 310' of the contacts 300' are located inside the tuboid portion 410". Also, the abutting portions 221 ", 222", and 223" of the body 200" abut the rear face of the tuboid portion 410" of the shield case 400". The abutting-stop 411b" of the shield case 400" is inserted into a recess 211a" of the body 200" and abuts the back surface of the recess 211 a" (see Fig. 11D). The fixing portions 430" of the shield case 400" are inserted into the spaces S3" between the abutting portions 222" and the abutting portion 223" and fit between the abutting portions 222" and the abutting portion 223" (see Fig. 10B). The engaging portion 420" of the shield case 400" is inserted into the space S1" between the pair of abutting portions 221" (see Fig. 10A). The basal portions 441" and the curved portions 443" of the connecting portions 440" of the shield case 400" are inserted into the accommodating space of the body 200". The distal portions 442" of the connecting portions 440" accordingly project rearward from the accommodating space of the body 200".

The next step is to prepare the case 100" by injection molding, i.e. by pouring an insulating resin into a die not shown. The gasket 600' is fittingly placed around the case body 110" of the case 100". The tuboid portion 410" of the shield case 400" is then fittingly placed in the through hole 111" of the case 100". In this state, as shown in Figs. 10A and 10B, the abutting portions 221 ", 222", and 223" of the body 200" abut the periphery 112b" of the case 100", and the engaging portion 420" of the shield case 400" also abuts the periphery 112b" of the case 100". The protrusions 221a" of the body 200" fit in the recesses 116" of the case 100". Also, the tongue 240" of the body 200", the contact portions 310' of the contacts 300', and the front portion 211" of the main body 210" are located inside the through hole 111" of the case 100".

As the case 100", the body 200", the contacts 300', and the shield case 400", are combined as described above, they are put into a die (not shown), and an insulating resin is poured into space around the outer circumferential surface of the rear portion 212" of the main body 210" and into space behind the rear face of the rear plate 230", i.e. performing outsert molding. The molded insulating resin forms the annular joint 500" covering the outer circumferential surface of the rear portion 212" of the main body 210" and the rear face of the rear plate 230". The annular joint 500" serves to join the outer circumferential surface of the rear portion 212" of the main body 210" to the connecting protrusion 117", the periphery 112b" of the case 100" and the rear face of the tuboid portion 410" of the shield case 400". The annular joint 500" has embedded therein the connecting protrusion 117", the pair of abutting portions 221", the pair of abutting portions 222", the abutting portion 223", the rear plate 230", the engaging portion 420", and the fixing portions 430" of the shield case 400", the basal portions 441" of the connecting portions 440", and the curved portions 443" of the connecting portions 440". The tail portions 320' of the contacts 300' and the distal portions 442" of the connecting portions 440" accordingly project rearward from the annular joint 500".

The next step is to press-form the shield cover 700' out of a metal plate. The pair of second locking pieces 730' of the shield cover 700' is then inserted into the pair of locking grooves 114" of the case 100" and the pair of locking grooves 510" of the annular joint 500". The first locking piece 720' of the shield cover 700' is thus locked in the locking recess 113" of the case 100". The cover body 710' of the shield cover 700' is thus placed on the portion rearward of the frame 120" of the case body 110" and the annular joint 500". The connector assembled as described above may be mounted on a circuit board of an electronic device in a similar manner to Embodiment 2.

The connector may be connected to a mating plug connector in the following manner. The plug is inserted into the tuboid portion 410" of the connector. Then, contacts of the plug are brought into contact with the associated contact portions 310' of the contacts 300' of the connector. The connector is thus electrically connected to the mating plug.

The above-described connector provides similar effects to those of Embodiment 2. Further advantageously, each curved portion 443" bridges between each basal portion 441" and each distal portion 442" and is curved in a generally U-shape so that the basal portion 441" and the distal portion 442" are not arranged in a straight line. With this configuration, even when a very narrow gap exists along the boundary of any basal portions 441" and the curved portion 443" and the resin of the annular joint 500", the gap should have a curved part in a generally U-shape along the curved portion 443". That is, the non-straight gap is unlikely to allow intrusion of water and dust. In addition, the generally U-shaped curved portions 443" of the shield case 400" are embedded in the annular joint 500". The resin of the annular joint 500" is filled in the spaces S4" between the first opposed portions 443a" and the second opposed portions 443b" of the curved portions 443". It is therefore possible to increase the surface distances (contact areas) of the curved portions 443" of the connecting portions 440" with respect to the annular joint 500". That is, the gap should be lengthened in accordance with the surface distance, which is further effective in reducing intrusion of water and dust through the gap if any. Further, the annular joint 500" covers the connecting protrusion 117" of the case 100". All of these features contribute to improvement of the waterproofness and the dustproofness of the connector

It is to be noted that connectors of the invention are not limited to ones in accordance with Embodiments 1 to 3. They may be modified within the scope of the claims. Modification examples will be described in detail below.

The case may include a tuboid main body and an annular frame to fit around the main body as in Embodiments 1 to 3. The case may be modified in any manner as long as the case is of a tuboid shape with a through hole and a periphery of the through hole. The case 100" of Embodiment 3 is provided with the connecting protrusion 117" on its rear portion. However, the connecting protrusion may be omitted like Embodiments 1 and 2. Alternatively, a connecting protrusion may be provided on the case of Embodiments 1 or 2. If provided, the connecting protrusion may be covered by an annular joint as in Embodiment 3.

The body may include a main body including front and rear portions, a plurality of abutting portions, a rear plate, and a tongue as in Embodiments 1 to 3. The body may be modified as long as the body includes a main body and the main body includes a front portion to be received in the through hole of the case and a rear portion continuous with the front portion. In other words, the abutting portions, the rear plate, and/or the tongue may be omitted. In addition, the rear portion of the main body may be provided with a single abutting portion. Further, in Embodiments 1 to 3, the protrusions provided on the abutting portions are adapted to fit in the recesses formed in on the case. However, the protrusions and the recesses may be omitted. Alternatively, protrusions may be provided on the case to fit in recesses formed in the abutting portions.

The connector of the invention may include a shield case as in Embodiments 1 to 3. The shield case may be omitted. If omitted, the front portion of the main body may be of a shape adapted to be received in the through hole of the case. For example, the front portion of the main body may fit in the through hole of the case. Further, the shield case may include a tuboid portion, at least one engaging portion, at least one fixing portion, and connecting portions as in Embodiments 1 to 3. However, the shield case may be any electrically conductive tube adapted to fit in the through hole of the case and enclose the contact portions of the contacts. For instance, the shield case may be formed by depositing electrically conductive metal onto the inner or outer surface of the tuboid body of an insulating resin. In addition, the engaging portions, the fixing portions, and/or the connecting portions may be omitted.

The engaging portions and the fixing portions may be received in the spaces between the adjacent abutting portions of the body and embedded in the annular joint as in Embodiments 1 to 3. However, the engaging portions and/or the fixing portions may be modified as long as they are continuous with the tuboid portion of the shield case and embedded in the annular joint.

Also, the engaging portions may be of generally U-shape and each have an end to abut (engage) the periphery of the through hole of the case as in Embodiments 1 to 3. The engaging portions may be modified as long as they can engage the periphery of the through hole of the case. For instance, the end of an engaging portion may be folded back toward the tuboid portion to fit in an engaged recess or hole provided in the periphery of the through hole of the case. Alternatively, an engaging portion of generally L shape may be provided to abut the periphery of the through hole of the case or to fit in an engaged recess or hole.

The connecting portions may include basal portions to be received in the spaces between the adjacent abutting portions of the body and embedded in the body as in Embodiments I and 2. The connecting portions may include basal portions and curved portions to be disposed in the accommodating space of the body and embedded in the body as in Embodiment 3. The connecting portions may be modified as long as they are continuous with the tuboid portion of the shield case and pass through the annular joint.

The connecting portions may include curved portions of generally U-shape bridging between the basal portions and the distal portions, and each curved portion may be curved such that the basal portion and the distal portion are not arranged in a straight line as in Embodiment 3. The curved portion may be modified as long as each is curved in a generally U shape or a serpentine shape and embedded in the annular joint. For instance, the curved portion of generally U- or serpentine shape may be continuous with the tuboid portion, with the basal portion omitted. Also, the connecting portions 440 of Embodiment 1 may be modified to include curved portions of generally U- or serpentine shape. The tuboid portion 410 of Embodiment 1 may be continuous with curved portions of generally U- or serpentine shape. Also, each curved portion may be curved in a generally U- or serpentine shape such that the basal portion and the distal portion are arranged in a straight line. This modified curved portion of generally U or serpentine shape will also be able to reduce intrusion of water and dust through a narrow gap that may exist along the boundary between the curved portion and the basal portion of a contact and the resin of the annular joint. This is because the gap has a curve of generally U- or serpentine shape along the curved portion. Also, the curved portion of generally U- or serpentine shape embedded in the annular joint has an increased surface distance with respect to the annular joint, so that the gap is lengthened for the increased surface distance. The modified curved portion can thus reduce intrusion of water and dust effectively. The distal portions of the connecting portions may be modified as long as they project at least partly from the annular joint.

The protrusions 443a1" of the first opposed portions 443a" of Embodiment 3 abut the second opposed portions 443b", so that the spaces S4" are created between the first opposed portions 443a" and the second opposed portions 443b". However, the protrusions may be omitted. Further, the protrusions may be modified as long as at least one protrusion is provided on at least one of the first and second opposed portions and abuts the other of the first and second opposed portions so as to create a space between the first and second opposed portions. For instance, a protrusion may be provided on the second opposed portion to abut the first opposed portion. Alternatively, a protrusion may be provided on the first opposed portion to abut the second opposed portion and another protrusion may be provided on the second opposed portion to abut the first opposed portion. Further, in cases where a contact portion includes a curved portion configured of a serpentine shape and/or directly provided on the tuboid portion, the curved portion may have first and second opposed portions and a protrusion provided on at least one of the first and second opposed portions to abut the other of the first and second opposed portions so as to create a space between the first and second opposed portions.

The annular joint may join the periphery of the through hole of the case, the rear face of the tuboid portion of the shield case, and the outer circumferential surface of the rear portion of the main body of the body as in Embodiments 1 to 3. The annular joint may be any annular body of insulating resin adapted to join at least the rear portion of the main body and the periphery of the through hole of the case. For example, the annular joint is also applicable to the above-described modified connector without the shield case.

The intermediate portions of the contacts may be embedded in the main body and the rear plate of the body as in Embodiments 1 to 3. The intermediate portion of the contact may be of any configuration adapted to be held in the main body of the body. For instance, the intermediate portions of the contacts may be embedded only in the main body by insert molding. Alternatively, the intermediate portions of the contacts may be press-fitted in the press-fit holes formed in the main body. In this case, some adhesive may be used to seal between the intermediate portions of the contacts and the press-fit holes of the main body to improve the waterproofness and the dustproofness of the connector. The contact portions of the contacts may be received in the accommodating grooves of the tongue of the body as in Embodiments 1 to 3. The contact portions may be modified as long as they are located in the through hole of the case. In addition, the tail portions of the contacts may be modified as long as they are located on the opposite side of the intermediate portions from the contact portions.

The connector may include the shield cover as in Embodiments 1 to 3. The shield cover may be omitted. The shield cover may be of any electrically conductive shield cover adapted to cover the case and the annular joint at least partially. For instance, the shield cover may be formed by depositing an electrically conductive metal on an insulating resin.

The connector may include a gasket to fit around the main body as in Embodiments I to 3. The gasket may be omitted.

Lastly, the material, shapes, sizes, numbers, and arrangements constituting the respective components of the connector according to Embodiments I to 3 and various modifications have been described by way of example only and may be modified in any manner if they perform the same functions.

### Component List

- 100, 100', 100": Case
- 110, 110', 110": Case body
- 111, 111', 111": Through hole
- 112b, 112b', 112b": Periphery
- 120, 120', 120": Frame
- 200, 200', 200": Body
- 210, 210', 210": main body
- 211, 211',: Front portion
- 211" 212, 212', 212": Rear portion
- 221, 221', 221": Abutting portion
- 222, 222', 222": Abutting portion
- 223, 223', 223": Abutting portion
- 230, 230', 230": Rear plate
- 240, 240', 240": Tongue
- 300, 300': Contact
- 310, 310': Contact portion
- 320, 320': Tail portion
- 330, 330': Intermediate portion
- 400, 400', 400": Shield case
- 410, 410', 410": Tuboid portion
- 420, 420', 420": Engaging portion
- 430, 430', 430": Fixing portion
- 440, 440', 440": Connecting portion
- 441, 441', 441": Basal portion
- 442, 442', 442": Distal portion
- 443": Curved portion
- 443a": First opposed portion
- 443a1": Protrusion
- 443b": Second opposed portion
- 443c": Folded portion
- 500, 500', 500": Annular joint
- 600, 600': Gasket
- 700, 700': Shield cover

## Claims

1. A connector comprising:
a case (100; 100'; 100") including a through hole (111; 111'; 111") and a periphery (112b; 112b'; 112b") of the through hole;
a body (200; 200'; 200") including a main body (210; 210'; 210"), the main body including a front portion (211; 211'; 211") received in the through hole of the case and a rear portion (212; 212', 212") continuous with the front portion;
a contact (300; 300') including:
an intermediate portion (330; 330') held in the main body,
a contact portion (310; 310') received in the through hole of the case, and
a tail portion (320; 320') located on an opposite side of the intermediate portion from the contact portion; and
an annular joint (500; 500'; 500") of insulating resin to join the rear portion of the main body and the periphery of the through hole of the case.

2. The connector according to claim 1,
wherein the body (200; 200'; 200") further includes an abutting portion (221, 222, 223; 221', 222', 223'; 221", 222", 223") being provided on the rear portion (212; 212'; 212") of the main body (210; 210'; 210") and abutting the periphery (112b; 112b'; 112b") of the through hole (111; 111'; 111") of the case (100; 100'; 100"), and
the abutting portion is embedded in the annular joint (500; 500'; 500").

3. The connector according to claim 1 or 2, further comprising a shield case (400; 400'; 400") of tuboid shape possessing electrical conductivity, the shield case fitting in the through hole (111; 111'; 111") of the case (100; 100'; 100"), wherein
the front portion (211; 211'; 211") of the main body (210; 210'; 210") fits in the shield case,
the contact portion (310; 310') of the contact (300; 300') is enclosed by the shield case, and
the annular joint (500; 500'; 500") joins the rear portion (212; 212'; 212") of the main body, the periphery (112b; 112b'; 112b") of the through hole (111; 111'; 111") of the case, and the shield case.

4. The connector according to claim 3, wherein the shield case (400; 400'; 400") includes:
a tuboid portion (410; 410'; 410") fitting in the through hole (111; 111'; 111") of the case (100; 100'; 100"), and
an engaging portion (420; 420'; 420") continuous with the tuboid portion, engaged with the periphery (112b; 112b'; 112b") of the through hole of the case, and embedded in the annular joint (500; 500'; 500").

5. The connector according to claim 4,
wherein the engaging portion (420; 420'; 420") is folded back toward the tuboid portion (410; 410'; 410") side and includes an end (421; 421'; 421 ") abutting the periphery (112b; 112b'; 112b") of the through hole (111; 111'; 111") of the case (100; 100'; 100").

6. The connector according to claim 3, wherein the shield case (400; 400'; 400") includes:
a tuboid portion (410; 410'; 410") fitting in the through hole (111; 111'; 111") of the case (100; 100'; 100"), and
a connecting portion (440; 440'; 440") being continuous with the tuboid portion and passing through the annular joint (500; 500'; 500").

7. The connector according to claim 6,
wherein the connecting portion (440") includes a curved portion (443") curved in a generally U-shape or in a serpentine shape and embedded in the annular joint (500").

8. The connector according to claim 7, wherein
the connecting portion (443") further includes:
a basal portion (441") continuous with the tuboid portion (410") and embedded in the annular joint (500"), and
a distal portion (442") projecting from the annular joint, and
the curved portion (443") bridges the basal portion and the distal portion.

9. The connector according to claim 7 or 8, wherein
the curved portion (443") includes:
first (443a") and second (443b") opposed portions facing each other, and
a protrusion (443a1") provided on at least one of the first and second opposed portions, abutting the other of the first and second opposed portions, and creating a space (S4) between the first and second opposed portions, and
the resin of the annular joint (500") is filled in the space.

10. The connector according to claim 3, wherein the shield case (400; 400'; 400") includes:
a tuboid portion (410; 410'; 410") fitting in the through hole (111; 111'; 111") of the case (100; 100'; 100"), and
a fixing portion (430; 430'; 430") continuous with the tuboid portion and embedded in the annular joint (500; 500'; 500").

11. The connector according to claim 2, wherein
the abutting portion (221, 222, 223; 221', 222', 223'; 221", 222", 223") comprises a plurality of abutting portions circumferentially arranged at intervals on and around an outer circumferential surface of the main body (210; 210'; 210").

12. The connector according to claim 2, wherein
the abutting portion (221, 222, 223; 221', 222', 223'; 221", 222", 223") comprises a plurality of abutting portions circumferentially arranged at intervals on an around an outer circumferential surface of the main body (210; 210'; 210"),
the connector further comprises a shield case (400; 400'; 400") of tuboid shape possessing electrical conductivity, the shield case fitting in the through hole (111; 111'; 111") of the case (100; 100'; 100") and including:
a tuboid portion (410; 410'; 410") fitting in the through hole of the case, and
a fixing portion (430; 430'; 430") being continuous with the tuboid portion, fitting in between adjacent ones of the abutting portions, and being embedded in the annular joint (500; 500'; 500"),
the front portion (211; 211'; 211 ") of the main body fits in the shield case, and
the contact portion (310; 310') of the contact (300; 300') is enclosed by the shield case.

13. The connector according to any one of claims 2, 11, and 12,
wherein one of the periphery (112b; 112b'; 112b") of the through hole (111; 111'; 111") of the case (100; 100'; 100") and the abutting portion (221, 222, 223; 221', 222', 223'; 221", 222", 223") is provided with a protrusion (221 a; 221 a'; 221a"), and the other thereof is provided with a recess (116; 116'; 116") to fit over the protrusion.

14. The connector according to any one of claims 1 to 13,
wherein the intermediate portion (330; 330') of the contact (300; 300') is embedded in the main body (210; 210'; 210").

15. The connector according to any one of claims 1 to 14, further comprising a shield cover (700; 700') possessing electrical conductivity to partially cover the case (100; 100'; 100") and the annular joint (500; 500'; 500").

16. The connector according to any one of claims 1 to 15,
wherein at least one of the case (100; 100'; 100"), the body (200; 200'; 200"), and the annular joint (500; 500'; 500") is made of a polyamide resin.
